# EUROPEAN PATENT APPLICATION

(11) **EP 4 203 133 A1**
(43) Date of publication of application: **28.06.2023**
(21) Application number: 21937192.9
(22) Date of filing: 29.10.2021
(51) Int. Cl.: H01M 10/0567, H01M 4/04, H01M 4/485, H01M 4/505, H01M 4/525, H01M 10/0568

(54) **SECONDARY BATTERY, BATTERY MODULE, BATTERY PACK, AND ELECTRIC DEVICE**

(71) Applicant: Contemporary Amperex Technology Co., Limited, Fujian 352100 (CN)
(72) Inventor: ZHANG, Limei, Ningde, Fujian 352100 (CN); CHEN, Peipei, Ningde, Fujian 352100 (CN); WANG, Bangrun, Ningde, Fujian 352100 (CN); XIE, Haotin, Ningde, Fujian 352100 (CN)
(74) Representative: Ziebig Hengelhaupt Intellectual Property Attorneys Patentanwaltsanwaltskanzlei PartGmbB
(86) International application number: PCT/CN2021/127384
(87) International publication number: WO 2023/070516

(57) **Abstract**

This application provides a secondary battery, including a positive electrode plate and an electrolytic solution. The positive electrode plate includes a positive current collector and a positive film layer. The positive film layer includes a positive lithium supplementing agent. The positive lithium supplementing agent is selected from LiₓTO_{y}, where x ≥ 2, y ≥ 2, and T is a transition metal. The electrolytic solution includes a sulfide, and a valence of sulfur element in the sulfide is less than or equal to +4. The secondary battery according to this application achieves a high energy density and a high first-cycle Coulombic efficiency, improves a solid electrolyte interphase after being chemically formed and fully charged, achieves a low internal resistance of a battery cell, and can normally exert the capacity of the secondary battery.

## Description

### TECHNICAL FIELD

This application relates to the technical field of secondary batteries, and in particular, to a secondary battery, a battery module, a battery pack, and an electrical device.

### BACKGROUND

In recent years, secondary batteries have been widely used in fields such as electric tools, electric bicycles, electric motorcycles, electric vehicles, smart grids, military equipment, and aerospace. The great development of the secondary batteries gives rise to higher requirements on the energy density, cycle performance, safety performance, and other performance of the batteries. However, the secondary batteries currently can hardly meet people's higher requirements on durability. For example, in the field of electric vehicles, insufficient durability of the secondary batteries arouses people's "cruising range anxiety". Therefore, it is urgent to develop secondary batteries with a higher energy density.

### SUMMARY

This application is made in view of the foregoing technical problems, and aims to provide a secondary battery to solve problems such as increased internal resistance of a battery cell and underutilized capacity of the battery caused by gassing. The gassing occurs because a high-valence metal compound oxidizes an electrolytic solution, and the high-valence metal compound is generated by a positive lithium supplement additive by changing a valence in an initial charging process.

To achieve the foregoing objective, the inventor of this application has conducted intensive research and found that the foregoing technical problems can be solved by adding a sulfur compound into the electrolytic solution of the secondary battery in which the positive lithium supplement additive is added, where a valence of sulfur element in the sulfur compound is less than or equal to +4.

A first aspect of this application provides a secondary battery, including a positive electrode plate and an electrolytic solution.

The positive electrode plate includes a positive current collector and a positive film layer. The positive film layer includes a positive lithium supplement additive. The positive lithium supplement additive is selected from LiₓTO_{y}, where x ≥ 2, y ≥ 2, and T is a transition metal. The electrolytic solution includes a sulfide, and a valence of sulfur element in the sulfide is less than or equal to +4.

Therefore, according to this application, in an initial charging process, the positive lithium supplement additive included in the positive film layer compensates for the lithium consumed in forming an SEI film on a negative electrode, thereby improving an energy density of the secondary battery, and enhancing a first-cycle Coulombic efficiency and cycle performance of the battery. In addition, the sulfide with a valence of sulfur element less than or equal to +4 included in the electrolytic solution prevents the electrolytic solution from being continuously oxidized by the high-valence metal compound generated by the positive lithium supplement additive in the initial charging process, and in turn, prevents gassing caused by the oxidization. This improves a solid electrolyte interphase of a chemically formed and fully charged battery cell, reduces an internal resistance of the battery cell, and enables normal exertion of the capacity of the secondary battery.

In any embodiment, a molar ratio A of the sulfide to the positive lithium supplement additive satisfies: 0.01 ≤ A ≤ 10, and optionally, 0.05 ≤ A ≤ 5. In this way, the lithium supplementing effect of the positive lithium supplement additive can be exerted advantageously without giving rise to the problems such as increased internal resistance of the battery cell and underutilized capacity of the battery caused by gassing. The gassing occurs because a high-valence metal compound generated by the positive lithium supplement additive oxidizes an electrolytic solution.

In any embodiment, the valence of the sulfur element in the sulfide includes one or more of +4, 0, or -2. Optionally, the sulfide includes one or more of SO₂, CS₂, sulfoether, sulfite, sulfoxide, or thiocarbonate, and optionally, is one or more selected from SO₂, CS₂, dimethyl sulfide, ethylene sulfite, dimethyl sulfoxide, or thiocarbonate. This can further increase the reactivity between the sulfide and the high-valence metal compound, and further prevent the problems such as increased internal resistance of the battery cell and underutilized capacity of the battery caused by the positive lithium supplement additive.

In any embodiment, the positive lithium supplement additive includes one or more of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, or Li₂CuₓNi₁₋ₓT'_{y}O₂, where 0 < x < 1, 0 ≤ y < 0.1, and T' is one or more selected from Zn, Sn, Mg, Fe, or Mn. Optionally, the positive lithium supplement additive includes one or more of Li₂NiO₂, Li₂CuO₂, Li₅FeO₄, Li₆CoO₄, or Li₂CuₓNi₁₋ₓT'_{y}O₂, where 0 < x < 1, 0 ≤ y < 0.1, and T' is one or more selected from Zn, Sn, Mg, Fe, or Mn. Therefore, the added lithium supplement additive can easily compensate for lithium ions consumed in forming the SEI film on the negative electrode, thereby improving the energy density of the secondary battery, and enhancing the first-cycle Coulombic efficiency and cycle performance of the battery.

In any embodiment, a specific surface area S1 of the positive lithium supplement additive is less than or equal to 2.0 m²/g, and optionally ranges from 0.4 m²/g to 1.2 m²/g. This reduces a contact area between the high-valence metal compound and the electrolytic solution, reduces the amount of gas produced in an initial chemical formation process, improves the solid electrolyte interphase of a chemically formed and fully charged battery cell, reduces the internal resistance of the battery cell, and enables normal exertion of the capacity of the secondary battery.

In any embodiment, a mass percent of the positive lithium supplement additive in the positive film layer is 0.1% ≤ W1 ≤ 10%, and optionally 1% ≤ W1 ≤ 5%. In this way, the added positive lithium supplement additive can exert the lithium supplementing effect advantageously, and, by being used together with the sulfide, avoid the problems such as increased internal resistance of the battery cell and underutilized capacity of the battery caused by gassing. The gassing occurs because the excessive high-valence metal compound generated by the positive lithium supplement additive oxidizes an electrolytic solution. However, if the amount of the positive lithium supplement additive is excessive, the mass percent of a positive active material will be reduced, and the energy density of the battery cell will be impaired.

In any embodiment, a mass percent of the sulfide in the electrolytic solution is 0.1% ≤ W2 ≤ 10%, and optionally 0.5% ≤ W2 ≤ 5%. This can well prevent the problems such as increased internal resistance of the battery cell and underutilized capacity of the battery caused by the positive lithium supplement additive, and prevent the capacity exertion of the secondary battery from being impaired by excessive high-resistance SEI film formed by the lithium supplement additive on the negative electrode.

In any embodiment, the electrolytic solution further includes fluorosulfonate. Optionally, the fluorosulfonate is one or more selected from lithium fluorosulfonate, sodium fluorosulfonate, or potassium fluorosulfonate. A mass percent W3 of the fluorosulfonate in the electrolytic solution is less than or equal to 5%, and optionally ranges from 0.5% to 3%. This can alleviate the problem that the high-resistance SEI film formed by the sulfide on the negative electrode impairs capacity exertion of the secondary battery.

A second aspect of this application provides a battery module. The battery module includes the secondary battery according to the first aspect of this application.

A third aspect of this application provides a battery pack. The battery pack includes the battery module according to the second aspect of this application.

A fourth aspect of this application provides an electrical device. The electrical device includes at least one of the secondary battery according to the first aspect of this application, the battery module according to the second aspect of this application, or the battery pack according to the third aspect of this application.

The battery module, the battery pack, and the electrical device according to this application include the secondary battery according to the first aspect of this application, and therefore, have at least the same or similar technical effects of the secondary battery.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device according to an embodiment of this application.

### Reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes in detail a secondary battery and a manufacturing method thereof, a battery module, a battery pack, and an electrical device according to this application with due reference to drawings. However, unnecessary details may be omitted in some cases. For example, a detailed description of a well-known matter or repeated description of a substantially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and may be arbitrarily combined. That is, any lower limit may be combined with any upper limit to form a range. For example, if a range of 60 to 120 and a range of 80 to 110 are set out for a given parameter, it is expectable that such ranges may be understood as 60 to 110 and 80 to 120. In addition, if lower-limit values 1 and 2 are set out, and if upper-limit values 3, 4, and 5 are set out, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, the numerical range "0 to 5" means that all real numbers between 0 and 5 inclusive are set out herein, and the range "0 to 5" is just a brief representation of combinations of such numbers. In addition, when a parameter is expressed as an integer greater than or equal to 2, the expression is equivalent to that the parameter is an integer such as 2, 3, 4, 5, 6, 7, 8, 9, 10, 11, 12, and the like.

Unless otherwise expressly specified herein, all embodiments and optional embodiments hereof may be combined with each other to form a new technical solution.

Unless otherwise expressly specified herein, all technical features and optional technical features hereof may be combined with each other to form a new technical solution.

Unless otherwise expressly specified herein, all the steps described herein may be performed sequentially or randomly, and preferably, performed sequentially. For example, that the method includes steps (a) and (b) indicates that the method may include steps (a) and (b) performed sequentially, or steps (b) and (a) performed sequentially. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, and may also mean closed-ended inclusion. For example, the terms "include" and "comprise" may mean inclusion of other items that are not set out, or inclusion of only the items set out.

Unless otherwise expressly specified herein, the term "or" is inclusive. For example, the phrase "A or B" means "A alone, B alone, or both A and B." More specifically, the condition "A or B" is satisfied by any of the following: A is true (or existent) and B is false (or absent); A is false (or absent) and B is true (or existent); or, both A and B are true (or existent).

### [Secondary battery]

A secondary battery, also known as a rechargeable battery or storage battery, is a battery that is reusable after the active material is activated by charging the battery that has been discharged. An example of the secondary battery is a lithium-ion secondary battery.

Generally, a secondary battery includes a positive electrode plate, a negative electrode plate, a separator, and an electrolytic solution. During charge and discharge of the battery, active ions (such as lithium ions) are shuttled between the positive electrode plate and the negative electrode plate by intercalation and deintercalation. Disposed between the positive electrode plate and the negative electrode plate, the separator mainly serves to prevent a short circuit between the positive electrode plate and the negative electrode plate, and is penetrable by the active ions. The electrolytic solution is located between the positive electrode plate and the negative electrode plate, and primarily serves to conduct the active ions.

An embodiment of this application provides a secondary battery. The secondary battery includes a positive electrode plate and an electrolytic solution. The positive electrode plate includes a positive current collector and a positive film layer. The positive film layer includes a positive lithium supplement additive. The positive lithium supplement additive is selected from LiₓTO_{y}, where x ≥ 2, y ≥ 2, and T is a transition metal. The electrolytic solution includes a sulfide, and a valence of sulfur element in the sulfide is less than or equal to +4.

The applicant unexpectedly finds that, by adding a positive lithium supplement additive into the positive film layer, and adding a sulfide with a sulfur element valence less than or equal to +4 into the electrolytic solution, this application can improve the energy density of the secondary battery, enhance the first-cycle Coulombic efficiency and cycle performance of the battery, improve the solid electrolyte interphase of a chemically formed and fully charged battery cell, reduce the internal resistance of the battery cell, and enables normal exertion of the capacity of the secondary battery.

Although the underlying mechanism remains unclear, the applicant holds the opinions:
A specified positive lithium supplement additive added into the positive film layer can compensate for the lithium consumed by the formation of the SEI film on the negative electrode and improve the energy density, first-cycle Coulombic efficiency, and cycle performance of the secondary battery. However, a metal valence of the positive lithium supplement additive is changed in an initial charging process, giving rise to a high-valence metal compound. The high-valence metal compound oxidizes the electrolytic solution and leads to gassing. The gassing affects the transmission of lithium ions, and results in an increase in the internal resistance of the battery cell and underutilized capacity of the battery. The inventor finds that, if a specified sulfide is added into the electrolytic solution additionally, the sulfide can be converted into metal sulfate by preferentially reacting with a high-valence metal compound, thereby reducing the probability of gassing caused by the high-valence metal compound oxidizing the electrolytic solution, and in turn, improving the solid electrolyte interphase of a chemically formed and fully charged battery cell, reducing the internal resistance of the battery cell, and enabling normal exertion of the capacity of the secondary battery.

In some embodiments, a molar ratio A of the sulfide to the positive lithium supplement additive satisfies: 0.01 ≤ A ≤ 10, and optionally 0.05 ≤ A ≤ 5. In this way, when the molar ratio A is excessively low, the specified sulfide is unable to effectively suppress gassing caused by oxidization of the electrolytic solution performed by the high-valence metal compound generated by the positive lithium supplement additive. Consequently, the internal resistance of the battery cell increases, and the capacity of the battery is underutilized. When the molar ratio A is excessively high, the film-forming resistance of the excess specified sulfide on the negative electrode is excessively high, and impairs the exertion of the capacity of the secondary battery. When the molar ratio A falls within the foregoing range, the lithium supplementing effect of the positive lithium supplement additive can be exerted advantageously, and the problems such as increased internal resistance of the battery cell and underutilized capacity of the battery can be suppressed. Such problems are caused by oxidization of the electrolytic solution performed by the high-valence metal compound generated by the lithium supplement additive.

### [Positive electrode plate]

The positive electrode plate generally includes a positive current collector and a positive film layer disposed on at least one surface of the positive current collector. The positive film layer includes a positive active material and a positive lithium supplement additive.

As an example, the positive current collector includes two surfaces opposite to each other in a thickness direction thereof. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material base layer and a metal layer formed on at least one surface of the polymer material base layer. The composite current collector may be formed by overlaying a polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive lithium supplement additive is selected from LiₓTO_{y}, where x ≥ 2, y ≥ 2, and T is a transition metal. Specifically, the positive lithium supplement additive includes one or more of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, or Li₂CuₓNi₁₋ₓT'_{y}O₂, where 0 < x < 1, 0 ≤ y < 0.1, and T' is one or more selected from Zn, Sn, Mg, Fe, or Mn. Preferably, the positive lithium supplement additive includes one or more of Li₂NiO₂, Li₂CuO₂, Li₅FeO₄, Li₆CoO₄, or Li₂CuₓNi₁₋ₓT'_{y}O₂, where 0 < x < 1, 0 ≤ y < 0.1, and T' is one or more selected from Zn, Sn, Mg, Fe, or Mn. Therefore, the added lithium supplement additive can easily compensate for lithium ions consumed in forming the SEI film on the negative electrode, thereby improving the energy density of the secondary battery, and enhancing the first-cycle Coulombic efficiency and cycle performance of the battery.

A specific surface area S1 of the positive lithium supplement additive is less than or equal to 2.0 m²/g, and preferably ranges from 0.4 m²/g to 1.2 m²/g. This reduces a contact area between the high-valence metal compound and the electrolytic solution, reduces the amount of gas produced in an initial chemical formation process, improves the solid electrolyte interphase of a chemically formed and fully charged battery cell, reduces the internal resistance of the battery cell, and enables normal exertion of the capacity of the secondary battery.

In some embodiments, the mass percent of the positive lithium supplement additive in the positive film layer is at least 0.1%, preferably at least 1%, and is at most 10%, and preferably at most 5%. In this way, the added positive lithium supplement additive can exert the lithium supplementing effect advantageously, and, by being used together with the sulfide, avoid the problems such as increased internal resistance of the battery cell and underutilized capacity of the battery caused by gassing. The gassing occurs because the excessive high-valence metal compound generated by the positive lithium supplement additive oxidizes an electrolytic solution. In addition, if added excessively, the lithium supplement additive reduces the energy density of the secondary battery instead.

In the secondary battery according to this application, the positive active material is selected from materials capable of deintercalating and intercalating lithium ions. For example, the positive active material may be one or more selected from lithium iron phosphate, lithium manganese iron phosphate, lithium cobalt oxide, lithium nickel oxide, lithium manganese oxide, lithium nickel manganese oxide, lithium nickel cobalt manganese oxide, or lithium nickel cobalt aluminum oxide, or a compound formed by adding other transition metals or non-transition metals into any of the foregoing compounds.

In some embodiments, the positive film layer further optionally includes a binder. Exemplarily, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate, such as positive active material, positive lithium supplement additive, conductive agent, binder, and any other desired ingredients, into a solvent (such as N-methyl-pyrrolidone) to form a positive slurry, coating a positive current collector with the positive slurry, and performing steps such as drying and cold pressing to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction thereof. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material base layer and a metal layer formed on at least one surface of the polymer material base layer. The composite current collector may be formed by overlaying a polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the type of the negative active material is not particularly limited, and may be any negative active material well known in the art for use in a battery. As an example, the negative active material is preferably one or more selected from graphite, soft carbon, hard carbon, mesocarbon microbeads, carbon fibers, carbon nanotubes, simple-substance silicon, silicon-oxygen compound, silicon-carbon compound, silicon-carbon composite, or lithium titanium oxide. However, this application is not limited to such materials, and other conventional materials usable as a negative active material of a battery may be used instead. One of the negative active materials may be used alone, or at least two thereof may be combined and used together.

In some embodiments, the negative film layer further optionally includes a binder. As an example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. As an example, the conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### [Electrolytic solution]

The electrolytic solution disclosed in this application includes an organic solvent, a lithium salt, and an additive. The additive contains a sulfide in which a valence of sulfur element is less than or equal to +4.

In some embodiments, the valence of the sulfur element in the sulfide includes one or more of +4, 0, or -2. Specifically, the sulfide may include one or more of SO₂, CS₂, sulfoether, sulfite, sulfoxide, or thiocarbonate. Preferably, the sulfide is one or more selected from SO₂, CS₂, dimethyl sulfide, ethylene sulfite, dimethyl sulfoxide, or thiocarbonate.

In some embodiments, the mass percent W2 of the sulfide in the electrolytic solution is at least 0.01%, and preferably at least 0.1%. In addition, the sulfide forms a high-resistance SEI film on the negative electrode during charging. Excessive sulfide affects the exertion of the capacity of the secondary battery. Therefore, W2 is at most 10%, and preferably at most 5%. This can well prevent the problems such as increased internal resistance of the battery cell and underutilized capacity of the battery caused by the positive lithium supplement additive, and prevent the capacity exertion of the secondary battery from being impaired by excessive high-resistance SEI film formed by the lithium supplement additive on the negative electrode.

In some embodiments, the additive further includes fluorosulfonate. The fluorosulfonate is one or more selected from lithium fluorosulfonate, sodium fluorosulfonate, or potassium fluorosulfonate. The mass percent W3 of the fluorosulfonate in the electrolytic solution is less than or equal to 5%, and preferably satisfies 0.5% ≤ W3 ≤ 3%. This can alleviate the problem that the high-resistance SEI film formed by the sulfide on the negative electrode impairs capacity exertion of the secondary battery.

In some embodiments, the lithium salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the type of the organic solvent is not particularly limited, and may be selected according to actual needs, and may include one or more of other types of chain carbonate, cyclic carbonate, or carboxylate. The types of the chain carbonate, cyclic carbonate, and carboxylate are not specifically limited, and may be selected according to practical needs. The organic solvent may be one or more selected from diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl formate, methyl acetate, ethyl acetate, propyl acetate, methyl propionate, ethyl propionate, methyl propionate, or tetrahydrofuran.

In some embodiments, the electrolytic solution further optionally includes other additives. As an example, other additives may include at least one of a cyclic carbonate compound containing an unsaturated bond, a halogenated cyclic carbonate compound, a sulfate compound, a sultone compound, a disulfonate compound, a nitrile compound, an aromatic compound, an isocyanate compound, a phosphazene compound, a cyclic anhydride compound, a phosphite compound, a phosphate compound, a borate compound, or a carboxylate compound.

### [Separator]

In some embodiments, the secondary battery further includes a separator. The type of the separator is not particularly limited in this application, and may be any well-known porous separator that is highly stable both chemically and mechanically.

In some embodiments, the separator may be made of at least one selected from glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be wound or stacked to form an electrode assembly.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

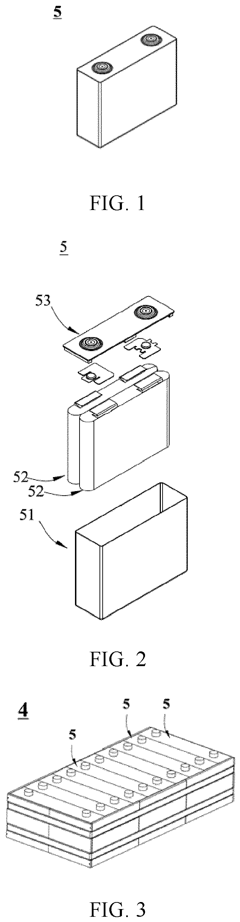

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates with the accommodation cavity. The cover plate 53 can cover the opening to close the accommodation cavity. The positive electrode plate, the negative electrode plate, and the separator may be wound or stacked to form the electrode assembly 52. The electrode assembly 52 is packaged in the accommodation cavity. The electrolytic solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on the application scenario and capacity of the battery module.

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery modules may be assembled into a battery pack. The battery pack may include one or more battery modules, and the specific number of battery modules in a battery pack may be selected by a person skilled in the art depending on practical applications and capacity of the battery pack.

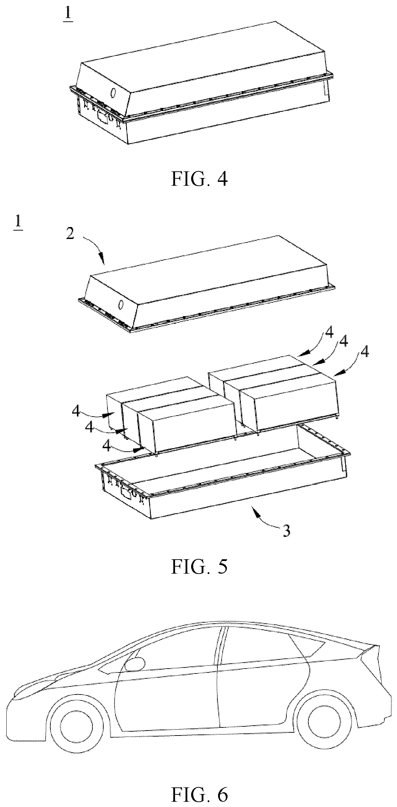

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for the electrical device according to practical requirements of the electrical device.

FIG. 6 shows an electrical device as an example. The electrical device may be a battery electric vehicle, a hybrid electric vehicle, a plug-in hybrid electric vehicle, or the like. To meet the requirements of the electrical device on a high power and a high energy density of the secondary battery, a battery pack or a battery module may be employed.

### Embodiments

The following describes embodiments of this application. The embodiments described below are exemplary, and are merely intended to construe this application but not to limit this application. In a case that no specific technique or condition is specified in an embodiment, the techniques or conditions described in the literature in this field or described in the instruction manual of the product may apply. A reagent or instrument used herein without specifying the manufacturer may be a conventional product that is commercially available in the market.

### Embodiments 1 to 35 and Comparative Embodiments 1 to 2

The secondary batteries in Embodiments 1 to 35 and Comparative Embodiments 1 to 2 are prepared by the following method.

### (1) Preparing a positive electrode plate

Dissolving lithium iron phosphate as a positive active material, a positive lithium supplement additive, polyvinylidene difluoride (PVDF) as a binder, acetylene black as a conductive agent at a mass ratio of (97-W1): W1: 2: 1 in an N-methyl pyrrolidone (NMP) solvent, and stirring and mixing well to obtain a positive slurry, where the type and mass percent W1 of the positive lithium supplement additive are shown in Table 1. Coating a positive current collector with the positive slurry evenly, and then performing steps of drying, cold calendering, and slitting to obtain a positive electrode plate.

### (2) Preparing a negative electrode plate

Dissolving an artificial graphite as an active substance, acetylene black as a conductive carbon, styrene butadiene rubber (SBR) as a binder, sodium carboxymethyl cellulose (CMC) as a thickener at a mass ratio of 95: 2: 2: 1 in a deionized water solvent, mixing such materials with the deionized water solvent evenly to make a negative slurry. Coating a negative current collector copper foil with the negative slurry evenly, drying the copper foil to obtain a negative electrode film, and then performing cold pressing and slitting to obtain a negative electrode plate.

### (3) Preparing an electrolytic solution

Dissolving 1 mol/L LiPF₆ and the sulfide and other additives shown in Table 1 (EC: DMC: EMC = 1: 1: 1) in an organic solvent in an argon atmosphere glovebox (H₂O < 0.1 ppm, O₂ < 0.1 ppm), and stirring evenly to obtain a corresponding electrolytic solution.

### (4) Preparing a separator

A conventional polypropylene film is used as a separator.

### (5) Preparing a secondary battery

Stacking the positive electrode plate, the separator, and the negative electrode plate in sequence so that the separator is located between the positive electrode plate and the negative electrode plate to serve a purpose of isolation, and then winding the stacked plates to obtain an electrode assembly; placing the electrode assembly into a battery housing, performing drying and then injecting an electrolytic solution, and performing steps such as chemical formation and standing to make a secondary battery.

### [Testing relevant parameters of the positive electrode material]

### 1. Testing the specific surface area S1 of the positive lithium supplement additive

### Standard: GB/T 19587-2017 Determination of the Specific Surface Area of Solids by Gas Adsorption Using the BET Method.

Specific operation process: 1. Pretreatment: Loading an appropriate amount of specimen in a special-purpose specimen tube, heating and vacuumizing to degas for 2 hours, measuring a total weight after the specimen is cooled to a room temperature, and subtracting the mass of the specimen tube to obtain the mass of the specimen. 2. Testing: Loading the specimen tube into a workstation, measuring an amount of gas adsorbed on the surface of a solid under different adsorption pressures and under a constant low temperature, and then determining a monolayer adsorption amount of the specimen based on the BET multilayer adsorption theory and formula, and calculating a specific surface area per unit mass of the solid specimen. 3. Adsorbed gas: nitrogen; adsorption pressure points: 0.05, 0.10, 0.15, 0.20, 0.25, 0.30; test atmosphere: high-purity liquid nitrogen atmosphere.

### [Testing battery performance]

### 1. Solid electrolyte interphase after chemical formation and full charging

Leaving an assembled battery to stand at 45 °C for 120 minutes, and then charging the battery at a constant current of 0.1 C for 7 minutes; leaving the battery to stand for 5 minutes, and then charging the battery at a constant current of 0.33 C until the voltage reaches 3.65 V; leaving the battery to stand for 5 minutes, and finally, charging the battery at a constant current of 0.1 C until the voltage reaches 4.3 V. Subsequently, disassembling the fully charged cell, and checking whether a purple speck or lithium plating occurs on a solid electrolyte interphase of the negative electrode.

### 2. Measuring the internal resistance of a battery cell

Charging the secondary battery at a constant current of 0.33 C at 25 °C until the voltage reaches 3.65 V, then charging the battery at a constant voltage of 3.65 V until the current is less than 0.05 C, and then discharging the secondary battery at a constant current of 0.33 C until the voltage reaches 2.5 V, and recording an actual capacity of the battery as C0 (mAh).

Adjusting the SOC of the secondary battery to 50%, and discharging the battery at a constant current of 4C0 for 30 seconds to obtain the internal resistance of the battery cell.

### 3. Testing the exertion of the capacity of the secondary battery

Charging the secondary battery at a constant current of 0.33 C at 25 °C until the voltage reaches 3.65 V, then charging the battery at a constant voltage of 3.65 V until the current is less than 0.05 C, and then discharging the secondary battery at a constant current of 0.33 C until the voltage reaches 2.5 V, and recording an actual capacity of the battery as C0 (mAh). The gram capacity of the secondary battery is C0/W_{L} (mAh/g), where W_{L} is a total mass (g) of the positive active material and the positive lithium supplement additive.

**Table 1**

| Specimen | Positive lithium supplement additive | | | Sulfide in which a valence of sulfur element is less than or equal to +4 | | Fluorosulfonate | | Molar ratio A of sulfide to positive lithium supplement additive | SEI status after chemical formation and full charging | Internal resistance of battery cell (mΩ) | Gram capacity (mAh/g) |
|---|---|---|---|---|---|---|---|---|---|---|---|
| | Type | Mass percent W1 of positive lithium supplement additive in positive electrode material (wt%) | Specific surface area S1 (m²/g) | Type | Mass percent W2 of sulfide in electrolytic solution (wt%) | Type | Mass percent W3 of fluorosulfonate in electrolytic solution (wt%) | | | | |
| Embodiment 1 | Li₂Cu_{0.6}Ni_{0.4}O₂ | 2 | 0.8 | SO₂ | 1 | / | / | 0.431 | Slight purple specks, local lithium plating | 2.39 | 146.8 |
| Embodiment 2 | Li₂Cu_{0.6}Ni_{0.4}O₂ | 2 | 0.8 | CS₂ | 1 | / | / | 0.363 | Slight purple specks, local lithium plating | 2.34 | 147.3 |
| Embodiment 3 | Li₂Cu_{0.6}Ni_{0.4}O₂ | 2 | 0.8 | Dimethyl sulfide | 1 | / | / | 0.445 | A few purple specks, local lithium plating | 2.41 | 145.4 |
| Embodiment 5 | Li₂Cu_{0.6}Ni_{0.4}O₂ | 2 | 0.8 | Dimethyl sulfoxide | 1 | / | / | 0.354 | A few purple specks, local lithium plating | 2.46 | 145.0 |
| Embodiment 6 | Li₂Cu_{0.6}Ni_{0.4}O₂ | 2 | 0.8 | Ethylene thiocarbonate | 1 | / | / | 0.256 | A few purple specks, local lithium plating | 2.51 | 144.2 |
| Embodiment 7 | Li₂Cu_{0.6}Ni_{0.4}O₂ | 0.1 | 0.8 | CS₂ | 1 | / | / | 7.207 | No purple specks, but local lithium plating | 2.18 | 142.4 |
| Embodiment 8 | Li₂Cu_{0.6}Ni_{0.4}O₂ | 1 | 0.8 | CS₂ | 1 | / | / | 0.728 | No purple specks, but local lithium plating | 2.23 | 145.1 |
| Embodiment 9 | Li₂Cu_{0.6}Ni_{0.4}O₂ | 5 | 0.8 | CS₂ | 1 | / | / | 0.145 | A few purple specks, local lithium plating | 2.42 | 143.7 |
| Embodiment 11 | Li₂Cu_{0.6}Ni_{0.4}O₂ | 10 | 0.8 | CS₂ | 1 | / | / | 0.073 | Medium amount of purple specks, local lithium plating | 2.54 | 142.0 |
| Embodiment 12 | Li₂Cu_{0.6}Ni_{0.4}O₂ | 15 | 0.8 | CS₂ | 1 | / | / | 0.048 | Medium amount of purple specks, local lithium plating | 2.58 | 141.9 |
| Embodiment 13 | Li₂Cu_{0.6}Ni_{0.4}O₂ | 2 | 0.8 | CS₂ | 0.1 | / | / | 0.036 | Medium amount of purple specks, local lithium plating | 2.60 | 143.9 |
| Embodiment 14 | Li₂Cu_{0.6}Ni_{0.4}O₂ | 2 | 0.8 | CS₂ | 0.5 | / | / | 0.182 | A few purple specks, | 2.54 | 145.4 |
| Embodiment 15 | Li₂Cu_{0.6}Ni_{0.4}O₂ | 2 | 0.8 | CS₂ | 2 | / | / | 0.726 | Slight purple specks, local lithium plating | 2.43 | 146.9 |
| Embodiment 16 | Li₂Cu_{0.6}Ni_{0.4}O₂ | 2 | 0.8 | CS₂ | 5 | / | / | 1.816 | No purple specks, but local lithium plating | 2.49 | 145.2 |
| Embodiment 17 | Li₂Cu_{0.6}Ni_{0.4}O₂ | 2 | 0.8 | CS₂ | 10 | / | / | 3.632 | No purple specks, but local lithium plating | 2.53 | 144.5 |
| Embodiment 18 | Li₂Cu_{0.6}Ni_{0.4}O₂ | 2 | 0.8 | CS₂ | 15 | / | / | 5.448 | No purple specks, but local lithium plating | 2.59 | 143.2 |
| Embodiment 19 | Li₂NiO₂ | 2 | 0.8 | CS₂ | 1 | / | / | 0.354 | Slight purple specks, local lithium plating | 2.42 | 145.9 |
| Embodiment 20 | Li₂CuO₂ | 2 | 0.8 | CS₂ | 1 | / | / | 0.37 | Slight purple specks, | 2.39 | 146.1 |
| Embodiment 21 | Li₅FeO₄ | 1.5 | 0.8 | CS₂ | 1 | / | / | 0.697 | Slight purple specks, local lithium plating | 2.43 | 145.7 |
| Embodiment 22 | Li₆CoO₄ | 1 | 0.8 | CS₂ | 1 | / | / | 1.112 | Slight purple specks, local lithium plating | 2.49 | 144.2 |
| Embodiment 23 | Li₂Cu_{0.6}Ni_{0.4}O₂ | 2 | 0.8 | CS₂ | 1 | Lithium fluorosulfonate | 1 | 0.363 | No purple specks, no lithium plating | 2.17 | 148.5 |
| Embodiment 24 | Li₂Cu_{0.6}Ni_{0.4}O₂ | 2 | 0.8 | CS₂ | 1 | Potassium fluorosulfonate | 1 | 0.363 | No purple specks, no lithium plating | 2.20 | 148.3 |
| Embodiment 25 | Li₂Cu_{0.6}Ni_{0.4}O₂ | 2 | 0.8 | CS₂ | 1 | Sodium fluorosulfonate | 1 | 0.363 | No purple specks, no lithium plating | 2.21 | 148.1 |
| Embodiment 26 | Li₂Cu_{0.6}Ni_{0.4}O₂ | 2 | 0.8 | CS₂ | 1 | Lithium | 3.1 | 0.363 | Slight purple specks, | 2.30 | 147.6 |
| Embodiment 27 | Li₂Cu_{0.6}Ni_{0.4}O₂ | 2 | 0.8 | CS₂ | 1 | Lithium fluorosulfonate | 3.5 | 0.363 | No purple specks, no lithium plating | 2.21 | 148.0 |
| Embodiment 28 | Li₂Cu_{0.6}Ni_{0.4}O₂ | 2 | 0.8 | CS₂ | 1 | Lithium fluorosulfonate | 2 | 0.363 | No purple specks, no lithium plating | 2.18 | 148.2 |
| Embodiment 29 | Li₂Cu_{0.6}Ni_{0.4}O₂ | 2 | 0.8 | CS₂ | 1 | Lithium fluorosulfonate | 5 | 0.363 | No purple specks, but local lithium plating | 2.23 | 147.8 |
| Embodiment 30 | Li₂Cu_{0.6}Ni_{0.4}O₂ | 2 | 0.8 | CS₂ | 1 | Lithium fluorosulfonate | 10 | 0.363 | No purple specks, but local lithium plating | 2.31 | 147.5 |
| Embodiment 31 | Li₂Cu_{0.6}Ni_{0.4}O₂ | 2 | 0.2 | CS₂ | 1 | / | / | 0.363 | Slight purple specks, local lithium plating | 2.46 | 144.5 |
| Embodiment 32 | Li₂Cu_{0.6}Ni_{0.4}O₂ | 2 | 0.4 | CS₂ | 1 | / | / | 0.363 | Slight purple specks, | 2.36 | 147.1 |
| Embodiment 33 | Li₂Cu_{0.6}Ni_{0.4}O₂ | 2 | 1.2 | CS₂ | 1 | / | / | 0.363 | Slight purple specks, local lithium plating | 2.38 | 146.8 |
| Embodiment 34 | Li₂Cu_{0.6}Ni_{0.4}O₂ | 2 | 1.7 | CS₂ | 1 | / | / | 0.363 | A few purple specks, local lithium plating | 2.45 | 145.6 |
| Embodiment 35 | Li₂Cu_{0.6}Ni_{0.4}O₂ | 2 | 2.2 | CS₂ | 1 | / | / | 0.363 | Medium amount of purple specks, local lithium plating | 2.51 | 144.2 |
| Comparative Embodiment 1 | / | / | / | / | / | / | / | / | No purple specks, no lithium plating | 2.17 | 141.5 |
| Comparative Embodiment 2 | Li₂Cu_{0.6}Ni_{0.4}O₂ | 2 | 0.8 | / | / | / | / | 0 | Plenty of purple specks, local lithium plating | 2.64 | 143.3 |
| Comparative Embodiment 3 | / | / | / | CS₂ | 1 | / | / | / | No purple specks, but local lithium plating | 2.58 | 140.2 |

### Result analysis

As can be seen from comparison between Embodiments 1 to 6 and Comparative Embodiment 2 in Table 1 above, with the same type and content of the lithium supplement additive, compared with Comparative Embodiment 2 in which no specified sulfide is added, the chemically formed and fully charged secondary batteries in Embodiments 1 to 6 make significant SEI improvement due to the specified sulfide added (SO₂, CS₂, dimethyl sulfide, vinyl sulfite, dimethyl sulfoxide, ethylene thiocarbonate), and in turn, the internal resistance of the battery cell is reduced, and the exertion of the capacity of the battery cell is improved.

In addition, as can be seen from Embodiment 2, Embodiments 7 to 12, Embodiments 13 to 18, Embodiments 19 to 22 versus Comparative Embodiments 1 and 2, when the lithium supplement additive is used in combination with the specified sulfide with their respective mass percent falling within the range set forth in this application, the solid electrolyte interphase of the chemically formed and fully charged secondary battery can be improved significantly, the internal resistance of the battery cell can be reduced, and the capacity of the battery cell can be increased.

In addition, as can be seen from comparison between Embodiment 2 and Embodiments 23 to 30, the added fluorosulfonate can further reduce the internal resistance of the battery cell and increase the capacity of the secondary battery. That is because the film-forming resistance of the added specified sulfide on the negative electrode is high, but the fluorosulfonate forms a low-resistance film on the surface of the negative electrode, thereby alleviating the resistance rise caused by the film formation of the specified sulfide. By controlling the type and content of the fluorosulfonate within the range specified in this application, the solid electrolyte interphase of the chemically formed and fully charged battery cell is further improved, the internal resistance of the battery cell is reduced, and the exertion of the capacity of the secondary battery is improved.

In addition, as can be seen from comparison between Embodiment 2 and Embodiments 31 to 35, the specific surface area of the positive lithium supplement additive also affects the performance of the battery cell. By reducing the specific surface area of the positive lithium supplement additive, the contact area between the high-valence metal compound and the electrolytic solution can be reduced, the amount of gas produced in an initial chemical formation process can be reduced, the solid electrolyte interphase of a chemically formed and fully charged battery cell can be improved, the internal resistance of the battery cell can be reduced, and the exertion of the capacity of the secondary battery can be exerted normally. When the specific surface area of the positive lithium supplement additive is controlled within the range specified in this application, the battery cell is more excellent in the solid electrolyte interphase after chemical formation and full charging, and in the internal resistance and capacity.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A secondary battery,
comprising a positive electrode plate and an electrolytic solution, wherein
the positive electrode plate comprises a positive current collector and a positive film layer, the positive film layer comprises a positive lithium supplementing agent, and the positive lithium supplementing agent is selected from LiₓTO_{y}, wherein x ≥ 2, y ≥ 2, and T is a transition metal; and
the electrolytic solution comprises a sulfide, and a valence of sulfur element in the sulfide is less than or equal to +4.

2. The secondary battery according to claim 1, wherein
a molar ratio A of the sulfide to the positive lithium supplementing agent satisfies: 0.01 ≤ A ≤ 10, and optionally 0.05 ≤ A ≤ 5.

3. The secondary battery according to claim 1 or 2, wherein
the valence of the sulfur element in the sulfide comprises one or more of +4, 0, or -2; and
optionally, the sulfide comprises one or more of SO₂, CS₂, sulfoether, sulfite, sulfoxide, or thiocarbonate, and optionally, is one or more selected from SO₂, CS₂, dimethyl sulfide, ethylene sulfite, dimethyl sulfoxide, or thiocarbonate.

4. The secondary battery according to any one of claims 1 to 3, wherein
the positive lithium supplementing agent comprises one or more of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, or Li₂CuₓNi₁₋ₓT'_{y}O₂, wherein 0 < x < 1, 0 ≤ y < 0.1, and T' is one or more selected from Zn, Sn, Mg, Fe, or Mn; and
optionally, the positive lithium supplementing agent comprises one or more of Li₂NiO₂, Li₂CuO₂, Li₅FeO₄, Li₆CoO₄, or Li₂CuₓNi₁₋ₓT'_{y}O₂, wherein 0 < x < 1, 0 ≤ y < 0.1, and T' is one or more selected from Zn, Sn, Mg, Fe, or Mn.

5. The secondary battery according to any one of claims 1 to 4, wherein
a specific surface area S 1 of the positive lithium supplementing agent is less than or equal to 2.0 m²/g, and optionally ranges from 0.4 m²/g to 1.2 m²/g.

6. The secondary battery according to any one of claims 1 to 5, wherein
a mass percent of the positive lithium supplementing agent in the positive film layer is 0.1% ≤ W1 ≤ 10%, and optionally, 1% ≤ W1 ≤ 5%.

7. The secondary battery according to any one of claims 1 to 6, wherein
a mass percent of the sulfide in the electrolytic solution is 0.1% ≤ W2 ≤ 10%, and optionally 0.5% ≤ W2 ≤ 5%.

8. The secondary battery according to any one of claims 1 to 7, wherein
the electrolytic solution further comprises fluorosulfonate, and
optionally, the fluorosulfonate is one or more selected from lithium fluorosulfonate, sodium fluorosulfonate, or potassium fluorosulfonate.

9. The secondary battery according to claim 8, wherein
a mass percent W3 of the fluorosulfonate in the electrolytic solution is less than or equal to 5%, and optionally 0.5% ≤ W3 ≤ 3%.

10. A battery module, comprising the secondary battery according to any one of claims 1 to 9.

11. A battery pack, comprising the battery module according to claim 10.

12. An electrical device, comprising at least one of the secondary battery according to any one of claims 1 to 9, the battery module according to claim 10, or the battery pack according to claim 11.
